# EUROPÄISCHE PATENTSCHRIFT

(11) **EP 3 038 879 B1**
(45) Veröffentlichungstag und Bekanntmachung des Hinweises auf die Patenterteilung: **01.11.2017**
(21) Anmeldenummer: 14771234.3
(22) Anmeldetag: 11.09.2014
(51) Int. Cl.: B61L 25/02

(54) **POSITIONSBESTIMMUNG EINES SCHIENENFAHRZEUGS**
DETERMINING THE POSITION OF A RAIL VEHICLE
DÉTERMINATION DE POSITION D'UN VÉHICULE FERROVIAIRE

(30) Priorität: 30.09.2013 DE 102013219805
(43) Veröffentlichungstag der Anmeldung: 06.07.2016
(73) Patentinhaber: Siemens Aktiengesellschaft, 80333 München (DE)
(72) Erfinder: BLEIDORN, Dirk Ernst, 38126 Braunschweig (DE); KOHLRUSS, Jacob Johannes, 38116 Braunschweig (DE)
(86) Internationale Anmeldenummer: PCT/EP2014/069387
(87) Internationale Veröffentlichungsnummer: WO 2015/043974

(56) Entgegenhaltungen:
- EP-A1- 0 836 978
- EP-A2- 0 618 459
- DE-A1-102006 007 788
- HILGER G: "RADARTECHNOLOGIE - BERUEHRUNGSFREIE WEG- UND GESCHWINDIGKEITS- MESSUNG FUER SCHIENENFAHRZEUGE", ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 122, Nr. 9/10, 1. September 1998 (1998-09-01), Seite 533, XP000781633, ISSN: 0941-0589

## Beschreibung

Die Erfindung betrifft ein Verfahren und eine Vorrichtung zur Positionsbestimmung eines Schienenfahrzeugs sowie ein entsprechendes Schienenfahrzeug und ein System mit mindestens einem solchen Schienenfahrzeug.

Beim Betrieb von Schienenfahrzeugen ist ein sogenanntes "Moving-Block"-Verfahren (Moving-Block: sich bewegender Block) bekannt, um eine möglichst dichte Schienenfahrzeugfolge auf einer Fahrstrecke (auch bezeichnet als Strecke) zu erreichen.

Bei Moving-Block-Systemen wird eine kontinuierliche Ortung von Schienenfahrzeugen durchgeführt, wobei eine Blocksicherung nicht auf festen Gleisabschnitten basiert. Stattdessen werden die Züge als sich bewegende Blöcke betrachtet, hinter denen sich andere Blöcke bewegen. Zur Berechnung dieser Blöcke ist die Bestimmung korrekter Positionen, Geschwindigkeiten und Fahrtrichtungen der Schienenfahrzeuge erforderlich. Dafür wird eine Balise-Odometrie-Konfiguration verwendet.

Eine Balise ist eine im Gleisbereich montierte Sendevorrichtung, die ein kodiertes Signal an vorbeifahrende Züge sendet. Die Balise ermöglicht einer Steuerung im Schienenfahrzeug in Verbindung mit einer digitalen Karte die Bestimmung einer absoluten Position mit einer Genauigkeit von ca. 30cm. Bei der Balise kann es sich auch um eine Balisengruppe, z.B. mehrere hintereinander angeordnete Balisen handeln.

Zwischen Balisen erfolgt die Positionsbestimmung des Schienenfahrzeugs relativ zur Balise mittels Odometer und einem Radarsensor zur Geschwindigkeitsmessung.

Hierbei ist es von Nachteil, dass diese Positionsbestimmung fehlerbehaftet ist. Störeinflüsse entstehen durch z.B. ein Gleiten und Schleudern der Schienenfahrzeugräder sowie durch Messfehler des Radars bei der Geschwindigkeitsmessung mit Hilfe von Objekten im Umfeld der Bahnstrecke. Die Genauigkeit der Positionsbestimmung verschlechtert sich somit mit zunehmender Entfernung von der zuletzt gelesenen Balise.

Beim Betrieb von Schienenfahrzeugen wird infrastrukturseitig oftmals zwischen freier Strecke und Stationsbereichen unterschieden. Bei einer Station handelt es sich z.B. um einen Bahnhof, eine Haltestelle oder einen vorgegebenen Haltebereich.

Die Bereiche einer Gleisinfrastruktur stellen aufgrund ihrer unterschiedlichen Funktionalitäten auch unterschiedliche Anforderungen an ein Zugsicherungssystem. So ist die Hauptfunktion der freien Strecke das Überwinden von Distanzen und die eines Bahnhofs, Fahrgästen einen Zutritt zum Schienenfahrzeug zu ermöglichen. Insbesondere wenn der Betrieb von Zügen halbautomatisch, fahrerlos oder unbegleitet erfolgt, ist die automatisch erzielte Haltegenauigkeit an einem Bahnsteig von Bedeutung, weil ein manuelles Nachregeln nicht oder nur mit hohem Aufwand möglich ist. Dies ist umso wichtiger, wenn an einem Bahnsteig Bahnsteigtüren installiert sind, die verhindern sollen, dass Fahrgäste während der Einfahrt des Schienenfahrzeugs es in den Gleisbereich treten. Die Bahnsteigtüren sollten mit den Türöffnungen des haltenden Schienenfahrzeugs soweit übereinstimmen, dass die Fahrgäste problemlos ein- und aussteigen können.

In aktuellen Systemkonfigurationen wird eine Mehr-Balisen-Konfiguration eingesetzt und somit die Ortungsgenauigkeit durch eine Verdichtung der Balisen erzielt. Bei einer solchen Mehr-Balisen-Konfiguration werden pro Haltepunkt am Bahnsteig und Richtung mindestens 4 Balisen benötigt. Häufig sind die Bahnsteige für Mehrrichtungsbetrieb und z.B. aufgrund unterschiedlicher Schienenfahrzeuglängen mit mehreren Haltepunkten ausgerüstet, so dass sich eine Balisenanzahl von über 20 Balisen pro Bahnsteiggleis ergeben kann. Die Genauigkeit der Ortung entspricht auch bestenfalls nur der Genauigkeit der Positionsbestimmung durch eine der Balisen.

Von Nachteil ist hierbei der Einsatz der großen Anzahl von Balisen. Auch ist es von Nachteil, dass die Positionsbestimmung trotz der Vielzahl von Balisen nur eine maximale Genauigkeit im Rahmen der Balisengenauigkeit erlaubt.

Sobald ein Schienenfahrzeug auf der Strecke oder bei einer Station eine Abzweigung bzw. Weiche passiert, kann die aktuelle Position des Schienenfahrzeugs zudem nur mittels der Odometrie, der digitalen Karte und einer aktuellen Fahrerlaubnis ("Movement Authority", MA) abgeleitet werden. In beiden Abzweigrichtungen muss in einem nächsten Balisen-Suchfenster, d.h. einem Ort der nächsten Balise und unter Berücksichtigung einer maximalen Messungenauigkeit, eine Neupositionierungs-Balise gelesen werden, um die Ortung zu verifizieren. Auch hierfür sind weitere Balisen nötig.

Aus der deutschen Offenlegungsschrift DE 10 2006 07 788 A1 ist ein Verfahren bekannt, bei dem mit einem auf einem Fahrzeug positionierten Sensorsystem während der Fahrt die in einer vorgegebenen Umgebung um das Fahrzeug auftauchenden Objekte detektiert und deren räumliche Positionsdaten in Bezug auf den Streckenverlauf berechnet werden. Ziel ist es hierbei, die detektierten Objekte einer Positionsmarke zuzuordnen, wobei für den Fall, dass ein detektiertes Objekt keiner Positionsmarke zugeordnet werden kann, eine Abweichung von einem Normalbetriebszustand festgestellt wird. Darüber hinaus besteht die Möglichkeit, dass ein Teil der Positionsmarken als Messmarken eingestuft wird, wobei aus einer durch das Sensorsystem erfassten Entfernung zwischen dem Fahrzeug und dem der Messmarke zugeordneten Objekt die Position des Fahrzeugs entlang des Streckenverlaufs mit Hilfe der räumlichen Positionsdaten der Messmarke ermittelt wird.

Die Aufgabe der Erfindung besteht darin, die vorstehend genannten Nachteile zu vermeiden und insbesondere eine effiziente Möglichkeit zu schaffen, die Position eines Schienenfahrzeugs zu bestimmen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Positionsbestimmung eines Schienenfahrzeugs vorgeschlagen, wobei in einem Odometriebereich die Positionsbestimmung mittels eines Odometers des Schienenfahrzeugs durchgeführt wird, in einem Reflektor-Sichtbereich die Position des Schienenfahrzeugs anhand eines von einer Sensoreinheit des Schienenfahrzeugs empfangenen reflektierten Signals bestimmt wird und der Odometriebereich durch den Reflektor-Sichtbereich abgelöst wird, sobald ein von einem Reflektor empfangenes reflektiertes Signal eine vorgegebene Mindestintensität aufweist.

Hierbei sei angemerkt, dass das Schienenfahrzeug (auch bezeichnet als "Zug") mindestens einen Wagen aufweist, wobei der Wagen ein Triebfahrzeug, ein Reisewagen, ein Güterwagen oder eine Kombination aus derartigen Abteilen oder Funktionen sein kann. Das Triebfahrzeug weist eine Führerkabine (auch bezeichnet als Bedienplatz) auf und kann mit oder ohne Antrieb ausgeführt sein. Das Triebfahrzeug kann insbesondere eine Lokomotive sein. Insbesondere kann es sich bei dem Schienenfahrzeug um eine Metrostadtbahn (z.B. S- oder U-Bahn) handeln, die zumindest teilweise unterirdisch in Tunneln fährt. Insbesondere kann das Schienenfahrzeug ein mit einem Fahrzeugführer besetztes oder ein führerloses Schienenfahrzeug sein. Im fahrerlosen Betrieb kann das Triebfahrzeug ein Notbedienpult aufweisen, das beispielsweise im Fahrgastraum hinter einer verschließbaren Klappe angeordnet ist.

Ermöglicht wird somit eine verbesserte und effiziente Positionsbestimmung des Schienenfahrzeugs. Insbesondere kann basierend auf dem vorgestellten Ansatz kosteneffizient die Anzahl der benötigten Balisen reduziert werden.

Ein Vorteil ist es, dass eine Stationseinfahrt eines insbesondere fahrerlosen Schienenfahrzeugs mit verbesserter Bestimmung der Position ermöglicht wird.

So kann hierbei beispielsweise eine bereits existierende Ausrüstung des Schienenfahrzeugs genutzt werden.

Vorteilhaft können in Ergänzung zu oder anstatt von Balisen, insbesondere Festdatenbalisen im oder am Gleis, Reflektoren, insbesondere kostengünstige und im Betrieb wartungsarme Radar-Reflektor-Bleche installiert werden.

Ein weiterer Vorteil ist die Erhöhung der Ortungsgenauigkeit durch das beschriebene Messverfahren. So kann der Messfehler bei der Positionsbestimmung (verursacht z.B. durch die Odometrie des Schienenfahrzeugs) reduziert werden, indem die Messung gegen den Reflektor erfolgt. Die Position des Reflektors ist vorzugsweise bekannt, so dass hieraus die Position des Schienenfahrzeugs bestimmt werden kann.

Auch ist es von Vorteil, dass im Gegensatz zur Positionsbestimmung über die Festdatenbalisen die Positionsbestimmung mittels Reflektor kontinuierlich oder zu vorgegebenen Zeitintervallen periodisch oder aperiodisch stattfinden kann.

Ein weiterer Vorteil ist die Möglichkeit einer Selbstüberprüfung des Systems auf Funktionsfähigkeit: Zusätzlich zur Positionsbestimmung mittels Reflektoren kann in vorgegebenen Abständen, z.B. nach mehreren Reflektoren, eine Positionsbestimmung mittels Balise erfolgen und ein Abgleich der Positionswerte der Balisenmessung und der Reflektormessung durchgeführt werden.

Ferner ist es ein Vorteil, die Reflektoren außerhalb des Gleisbetts anzuordnen und somit die Wartung des Gleisbetts, z.B. beim Stopfen des Schotters, zu vereinfachen und Beschädigungen der Reflektoren durch vom Schienenfahrzeug herunterhängende Teile zu verhindern.

Durch den vorgestellten Ansatz wird weiterhin eine ausreichend genaue Ortung ermöglicht, um beispielsweise ein Bremsverhalten bei einer Stationseinfahrt zu optimieren, d.h. insbesondere so spät wie möglich zu bremsen, um Parameter wie Fahrzeit und Schienenfahrzeugabstand zu verringern.

Ein weiterer Vorteil ist die Möglichkeit der einfachen automatischen Neupositionierung des Schienenfahrzeugs im Falle eines Bremsfehlers durch eine relative Abstandsbestimmung zu einem Reflektor als einem bekannten Punkt.

Anstelle eines als die Sensoreinheit bevorzugt beschriebenen Radargeräts können auch andersartige Sensoreinheiten eingesetzt sein. Diese können beispielsweise auf Ultraschall, Licht oder Laserlicht basieren und von Reflektoren reflektierte Schall- oder Lichtwellen erfassen.

Erfingdungsgemäß wird anhand eines von der Sensoreinheit des Schienenfahrzeugs empfangenen reflektierten Signals die Position des Schienenfahrzeugs bestimmt, sobald das reflektierte Signal eine vorgegebene Mindestintensität aufweist. Hierbei wird ein Odometriebereich, also ein Bereich in dem die Positionsbestimmung mittels Odometer des Schienenfahrzeugs durchgeführt wird, durch einen Reflektor-Sichtbereich abgelöst, sobald ein von einem Reflektor empfangenes reflektiertes Signal eine vorgegebene Intensität aufweist.

Eine Weiterbildung ist es, dass die Sensoreinheit eine Übertragungseinheit, insbesondere Sende-Empfangseinrichtung ist, die ein Radarsignal aussendet und ein reflektiertes Radarsignal empfängt, wobei anhand des reflektierten Radarsignals die Position des Schienenfahrzeugs bestimmt wird.

Eine andere Weiterbildung ist es, dass
- das empfangene reflektierte Signal von einem Reflektor bereitgestellt wird, der im Sichtbereich des Schienenfahrzeugs angeordnet ist,
- die Position des Reflektors gespeichert ist und
- anhand der gespeicherten Position des Reflektors und anhand des empfangenen reflektierten Signals die Position des Schienenfahrzeugs bestimmt wird.

Insbesondere weist das Schienenfahrzeug einen Empfänger auf, der beispielsweise in Fahrtrichtung am Schienenfahrzeug derart angeordnet ist, dass reflektierte Signale empfangen werden, die von im Vorfeld des Schienenfahrzeugs angeordneten Reflektoren reflektiert wurden.

Insbesondere ist es eine Weiterbildung, dass die Position des Reflektors in einer digitalen Karte gespeichert ist.

Die digitale Karte ist dazu beispielsweise lokal in dem Schienenfahrzeug gespeichert oder kann von diesem, z.B. über eine Mobilfunkschnittstelle, (ggf. in Teilen) geladen werden. Die Karte umfasst beispielsweise Informationen über Positionen der entlang der Strecke aufgestellten Reflektoren. Nach Empfang eines reflektierten Signals kann durch einen Abgleich mit Informationen der Karte die momentane Position des Schienenfahrzeugs bestimmt werden.

Hierbei sei angemerkt, dass als digitale Karte jedwede gespeicherten ortsrelevanten Informationen sein können, umfassend z.B. Koordinaten von Reflektoren und/oder Balisen, Streckendaten, Stellwerken, etc.

Auch ist es eine Weiterbildung, dass die Position des Schienenfahrzeugs anhand des empfangenen reflektierten Signals von mindestens dem Reflektor und anhand von Daten, die einer Balise ausgelesen werden, bestimmt wird.

Bei der Balise kann es sich um eine Balisengruppe, also eine Anordnung von mehreren zumeist hintereinander angebrachten Balisen, handeln.

Ferner ist es eine Weiterbildung, dass mittels der von der Balise ausgelesenen Daten und mittels des empfangenen reflektierten Signals eine Funktionsprüfung der Sensoreinheit durchgeführt wird.

Beispielsweise kann bei einer Balisenüberfahrt die Funktionsfähigkeit der Sensoreinheit bzw. des Radars mit Hilfe einer Referenzmessung durch Bestimmung des Abstands von der Balise zu dem nächsten Reflektor überprüft werden.

Eine nächste Weiterbildung besteht darin, dass der Reflektor in Fahrtrichtung nach der Balise angeordnet ist.

Eine Ausgestaltung ist es, dass zwischen der Balise und dem Reflektor ein vorgegebener Abstand liegt, wobei anhand des vorgegebenen Abstands ab einer bestimmten Strecke nach der Balise in dem reflektierten Signal nach dem Reflektor gesucht wird.

Beispielsweise beginnt ein Reflektor-Suchbereich vor Erreichen des tatsächlichen Reflektor-Sichtbereichs. Vorteilhaft verhindert die fortwährende Suche nach einem Reflektor eine Fehlerkennung; somit kann optional die Suche nach dem Reflektor erst dann gestartet werden, wenn dieser in den Sichtbereich der Sensoreinheit gelangt. Die Information, wann der Reflektor in den Sichtbereich gelangt, ist der digitalen Karte (dort ist die Position des Sensors gespeichert) sowie der gegenwärtigen (ggf. mittels Odometrie bestimmten) Position des Schienenfahrzeugs entnehmbar.

Eine weitere Ausführungsform besteht darin, dass die Balise eine Entfernungsinformation zu dem Reflektor bereitstellt.

Beispielsweise stellt die Balise in ihrem an das Schienenfahrzeug übermittelten Telegramm auch die Information bereit, wie weit der nächste Reflektor entfernt ist oder ab welcher Strecke nach der Balise nach dem nächsten Reflektor gesucht werden kann.

Eine nächste Ausgestaltung ist es, dass mehrere Reflektoren vorgesehen sind, wobei zumindest ein Teil der Reflektoren unterschiedlichen Typs sind.

Unterschiedliche Typen von Reflektoren stellen vorzugsweise unterschiedlich reflektierte Signale bereit. Insbesondere handelt es sich bei den unterschiedlichen reflektierten Signalen um voneinander unterscheidbare Signale. Damit können Reflektoren voneinander unterschieden werden und insbesondere Abfolgen von Reflektor-Typ-Informationen ausgewertet werden, um z.B. eine Fahrtrichtung zu bestimmen und/oder festzustellen, auf welchen (von mehreren ggf. parallelen) Gleisen sich ein Schienenfahrzeug befindet.

Hierbei ist es ein Vorteil, dass zur Bestimmung einer Fahrtrichtung nicht zwei Balisen überfahren werden müssen, wenn z.B. unterschiedliche Reflektor-Typen (vor und hinter einer Balise) aufgestellt werden.

Beispielsweise können sich Reflektoren unterschiedlichen Typs hinsichtlich ihrer Reflexionseigenschaften oder Reflexionsmuster unterscheiden. Vorzugsweise werden solche Typen von Reflektoren gewählt, die von der Sensoreinheit möglichst gut voneinander unterschieden werden können.

Auch ist es eine Ausgestaltung, dass in Fahrtrichtung vor und hinter einer Weiche Reflektoren vorgesehen sind, wobei die Reflektoren hinter der Weiche unterschiedlichen Typs sind.

Eine zusätzliche Ausgestaltung ist es, dass anhand des von der Sensoreinheit des Schienenfahrzeugs empfangenen reflektierten Signals bestimmt wird, ob das Schienenfahrzeug abbiegt.

Wird innerhalb des Reflektor-Sichtbereichs eine Weiche überfahren, kann z.B. aufgrund einer relativen Bewegung des Reflektors zum Zug im Messbild der Sensoreinheit festgestellt werden, welcher Strecke das Schienenfahrzeug folgt, z.B. ob es geradeaus fährt oder abbiegt.

Die oben genannte Aufgabe wird auch gelöst durch eine Vorrichtung zur Positionsbestimmung eines Schienenfahrzeugs mit einem Odometer und einer Sensoreinheit, wobei die Vorrichtung ausgebildet ist, in einem Odometriebereich die Positionsbestimmung mittels des Odometers des Schienenfahrzeugs durchzuführen, in einem Reflektor-Sichtbereich die Position des Schienenfahrzeugs anhand eines von der Sensoreinheit des Schienenfahrzeugs empfangenen reflektierten Signals zu bestimmen und den Odometriebereich durch den Reflektor-Sichtbereich abzulösen, sobald ein von einem Reflektor empfangenes reflektiertes Signal eine vorgegebene Mindestintensität aufweist.

Zusätzlich wird die obige Aufgabe gelöst durch ein Schienenfahrzeug mit einer Vorrichtung wie vorgestehend beschrieben.

Ferner wird die Aufgabe gelöst durch ein System mit mindestens einem Schienenfahrzeug wie hierin beschrieben sowie mit längs einer Strecke angeordneten Reflektoren.

Die Ausführungen betreffend das Verfahren gelten für die Vorrichtungen, d.h. die Vorrichtung zur Positionsbestimmung sowie das Schienenfahrzeug und das System entsprechend.

Eine Verarbeitungseinheit des Schienenfahrzeugs, die derart eingerichtet ist, dass eine Position des Schienenfahrzeugs anhand eines vor der Sensoreinheit empfangenen reflektierten Signals bestimmbar ist, kann insbesondere als eine Prozessoreinheit und/oder eine zumindest teilweise festverdrahtete oder logische Schaltungsanordnung ausgeführt sein, die beispielsweise derart eingerichtet ist, dass das Verfahren wie hierin beschrieben durchführbar ist. Besagte Verarbeitungseinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen. Die Verarbeitungseinheit kann Teil einer Steuereinheit des Schienenfahrzeugs sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: Komponenten eines Systems zur Positionsbestimmung eines Schienenfahrzeugs mit einer Sensoreinheit und ein Diagramm zur Veranschaulichung eines Genauigkeitsverlaufs einer solchen Positionsbestimmung,
- Fig.2: Komponenten eines Systems zur Positionsbestimmung eines Schienenfahrzeugs in gegenüber Fig. 1 modifizierter Ausgestaltung und ein Diagramm zur Veranschaulichung eines Geschwindigkeitsverlaufs abhängig von einer Positionsbestimmung und
- Fig.3: ein Fahrstreckensystem mit Gleisabzweigungen und beispielhaften Positionen von Reflektoren unterschiedlichen Reflektor-Typs.

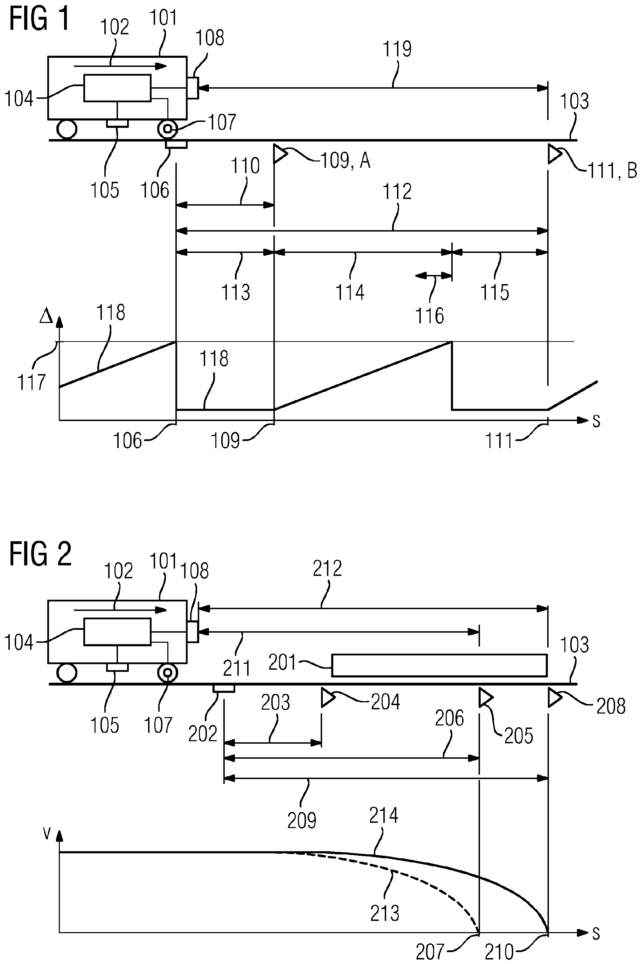

Fig.1 zeigt ein Schienenfahrzeug 101, das in einer Fahrtrichtung 102 längs eines Gleises 103 fährt. Zum Betrieb weist das Schienenfahrzeug 101 eine Steuerung 104 auf. Diese dient insbesondere auch zur Positionsbestimmung einer momentanen Position des Schienenfahrzeugs 101.

Das Schienenfahrzeug 101 umfasst bevorzugt als ein daran angeordnetes Gerät eine Balisenleseeinrichtung 105, mit der Daten von einer Balise 106 erfasst werden. Die Balise 106 ist beispielsweise als eine Balisengruppe, z.B. als oder umfassend eine Festdaten-Balise, in einem Gleisbett angeordnet und sendet dem überfahrenden Schienenfahrzeug 101 ein kodiertes Signal. Das kodierte Signal kann neben einer Information über die Balise 106 auch deren Positionsangabe umfassen. Ein solches kodiertes Signal der überfahrenen Balise 106 wird von der Balisenleseeinrichtung 105 empfangen und zur weiteren Verarbeitung an die Steuerung 104 übertragen.

Das Schienenfahrzeug 101 umfasst bevorzugt als ein weiteres daran angeordnetes Gerät ein Odometer 107, mit dem von dem Schienenfahrzeug 101 zurückgelegte Strecken erfasst werden. Messwerte bzw. ein Signal des Odometers 107 werden zur weiteren Verarbeitung an die Steuerung 104 übertragen.

Das Schienenfahrzeug 101 umfasst eine Sensoreinheit, welche ausgestaltet ist, ein reflektiertes Signal zu erfassen und bei der Positionsbestimmung zu verwenden. Insbesondere weist die Sensoreinheit einen Empfänger 108 auf. Bevorzugt ist die Sensoreinheit als ein Radarsensor ausgestaltet. Der Empfänger 108 ist in Fahrtrichtung 102 am Schienenfahrzeug 101 derart angeordnet, dass reflektierte Signale empfangen werden, die von im Vorfeld des Schienenfahrzeugs 101 angeordneten Reflektoren 109, 111 reflektiert wurden. Solche Reflektoren 109, 111 sind entsprechend so im Bereich des Gleises 103 angeordnet, dass diese ein auf die Reflektoren 109, 111 gerichtetes Signal in Richtung des auf sie zufahrenden Schienenfahrzeugs 101 reflektieren.

Insbesondere weist die Sensoreinheit auch einen Sender auf, der zu reflektierende Signale emittiert. Sender und Empfänger können dabei als eine kombinierte Sende-Empfangseinheit ausgebildet sein.

Die Steuerung 104 kann auf eine digitale Karte zugreifen. Die digitale Karte ist dazu beispielsweise lokal in dem Schienenfahrzeug 101 gespeichert. Die Karte umfasst Informationen über Positionen der entlang der Strecke 103 aufgestellten Reflektoren 109, 111. Nach Empfang eines reflektierten Signals durch die Sensoreinheit bestimmt die Steuerung 104 durch einen Abgleich mit Informationen der Karte die momentane Position des Schienenfahrzeugs 101. Insbesondere bei Einsatz einer kombinierten Sende-Empfängereinheit kann so unter Verwendung der Laufzeit des gesendeten und des reflektierten Signals eine genauere Positionsbestimmung durchgeführt werden, als dies bei Einsatz nur des Odometers 107 möglich wäre. Insbesondere kann die Sensoreinheit auch Teile der Steuerung und/oder von deren Software zur Bestimmung der Position aufweisen.

Beispielhaft ist der erste Reflektor 109 mit einem vorbestimmten Abstand 110 hinter der Balise 106 im Bereich des Gleisbetts bzw. des Gleises 103 angeordnet. Dieser Abstand entspricht dabei einem Referenzabstand, dessen Abstandswert als Information in der Karte hinterlegt ist. Der Abstandswert kann alternativ oder zusätzlich auch als Systemgröße vordefiniert sein für bestimmte Anordnungen und/oder Ausgestaltungen von Balisen 106 und Reflektoren 109.

Durch Überfahren der Balise 106, die ihre eigene Lage in der Karte und/oder mittels z.B. Koordinatenangaben ihre eigene Position übermittelt, erhält die Steuerung 104 eine Angabe über die momentane Position des Schienenfahrzeugs 101. Optional ermittelt die Steuerung 104 mittels des Referenzabstands oder einer Karteninformation den momentanen Abstand zu dem Reflektor 109. Ab diesem Zeitpunkt kann die Steuerung 104 durch (z.B. fortwährendes) Empfangen von Signalen, die von diesem Reflektor 109 reflektiert werden, die momentane Position des Schienenfahrzeugs 101 ermitteln.

Bei zu großer Annäherung an den Reflektor 106 bzw. bei Verlassen eines Reflektor-Sichtbereichs 113 des Reflektors 106, empfängt die Steuerung 104 keine bzw. keine ausreichend genau auswertbaren reflektierten Signale mehr. Nachfolgend befährt das Schienenfahrzeug 101 einen Odometriebereich 114. In dem Odometriebereich 114 verwendet die Steuerung 104 Signale des Odometers 107 und ggfs. Signal-Reflexionen undefinierter Objekte im Umfeld des Gleises und bestimmt daraus eine zurückgelegte Strecke und die momentane Position.

Der weitere bzw. zweite dargestellte Reflektor 111 befindet sich in einem absoluten Abstand 112 hinter der Balise 106. Der Odometriebereich 114 endet beispielsweise, sobald das Schienenfahrzeug 101 einen Reflektor-Sichtbereich 115 des zweiten Reflektors 111 erreicht und von diesem reflektierte Signale insbesondere mit ausreichender Intensität empfängt. Ab diesem Punkt verwendet die Steuerung 104 vom zweiten Reflektor 111 reflektierte Signale, um die jeweils momentane Position des Schienenfahrzeugs 101 mittels eines relativen Abstands 119 zu dem Reflektor 111 zu bestimmen. Die Kenntnis über die genaue Position des zweiten Reflektors 111 als einem Referenzpunkt entnimmt die Steuerung 104 insbesondere der digitalen Karte.

Bevorzugt schaltet die Steuerung 104 bei Erreichen eines Reflektor-Suchbereichs 116 in einen Reflektor-Suchbetrieb, in dem mittels der Sensoreinheit insbesondere Signale gesendet und nach reflektierten Signalen gesucht wird. Der Reflektor-Suchbereich beginnt bevorzugt vor Erreichen des tatsächlichen Reflektor-Sichtbereichs 115.

Unterhalb der skizzierten Strecke ist in Fig.1 das Diagramm zur Veranschaulichung einer zugehörigen Genauigkeitsabweichung Δ einer Positionsbestimmung skizziert. Beispielhaft wiedergegeben ist eine Genauigkeitsabweichung 118 der mittels der Steuerung 104 bestimmten Position auf der Strecke s des Schienenfahrzeugs 101. Eine Linie markiert einen insbesondere maximal tolerierbaren Fehler 117, welcher je nach Systemvorgabe nicht überschritten werden darf oder sollte.

In einem ersten Abschnitt befindet sich das Schienenfahrzeug 101 in einem Odometriebereich, die Genauigkeit der bestimmten Position wird zunehmend ungenauer. Das System aus Balisen und Reflektoren ist so ausgelegt, dass das Schienenfahrzeug 101 die Balise 106 insbesondere spätestens bei Erreichen des noch tolerierbaren Fehlers 117 erreicht. Mit Empfang des Signals der Balise 106 bestimmt die Steuerung 104 eine genauere Positionsbestimmung bzw. wird der Fehler 117 der Odometrie korrigiert. Im Reflektor-Sichtbereichs 113 kann die Steuerung die Genauigkeit (in etwa) auf dem Niveau der Genauigkeit an der Stelle der Balise 106 halten. Optional kann durch die Messung über den Reflektor auch eine höherer oder niedrigere Genauigkeit der Positionsbestimmung als am Ort der Balise 106 erreicht werden. Fährt das Schienenfahrzeug an dem Reflektor 109 vorbei, folgt der Odometriebereich 114, die Genauigkeit der Positionsbestimmung nimmt wieder ab, bis an dem Punkt des Erreichens des tolerierbaren Fehlers 117 entweder eine weitere Balise oder - wie hier - der nächste Reflektor-Sichtbereich 115 erreicht wird. Gegebenenfalls ändert sich die Genauigkeit der Positionsbestimmung beim Durchfahren der Reflektor-Sichtbereiche 113, 115, was durch geeignet gewählte Überlappungen solcher Reflektor-Sichtbereiche berücksichtigbar oder ausgleichbar ist.

Die beiden Reflektoren 109, 111 können baugleich sein. Einsetzbar sind aber auch Reflektoren 109 und 111 unterschiedlichen Typs. Diese können sich in den Reflexionseigenschaften unterscheiden oder andersartig unterschiedlich definiert sein. Unterschiedliche Definitionen können sich z.B. dadurch ergeben, dass der erste Reflektor 109 der Balise 106 folgt, während der zweite Reflektor 111 dem ersten Reflektor 109 folgt, wobei entsprechende Informationen darüber insbesondere der Karte entnehmbar sein können.

Angegeben wird somit auch ein Ansatz zur insbesondere genauen Ortung bzw. Positionsbestimmung des Schienenfahrzeugs 101 mittels einer bestimmten Systemkonfiguration. Die Systemkonfiguration umfasst beispielsweise die Steuerung 104 bzw. ein Zugsteuergerät oder eine sonstige Zugsteuerung mit digitaler Karte, wobei sich die Karte bevorzugt im Schienenfahrzeug befindet. Die Karte kann auch über eine Funkschnittstelle, z.B. eine Telekommunikationsschnittstelle, bereitgestellt und ggf. heruntergeladen werden. Weiterhin umfasst die Systemkonfiguration beispielsweise den Empfänger 108, insbesondere einen Radarsensor an dem Schienenfahrzeug, und Reflektoren 109, 111, z.B. Radar-Reflektor-Bleche am Gleis 103. Die Systemkonfiguration umfasst beispielhaft auch Odometer 107 und ein Balisenlesegerät am Schienenfahrzeug sowie Balisen 106, insbesondere Festdatenbalisen im Gleis 103.

Die Komponenten der Systemkonfiguration ermöglichen eine Positionsbestimmung bzw. eine bevorzugt genaue Ortung des Schienenfahrzeugs 101. Ein beispielhafter Verfahrensablauf umfasst mindestens einen Teil der folgenden Schritte:

Das Schienenfahrzeug 101 fährt auf der freien Strecke auf eine Balise 106 zu. Die Bestimmung der absoluten Position erfolgt dabei absolut durch Festdatenbalisen und relativ über Odometrie mittels Odometer 107 und Radar. Dabei erfasst das Radar unbekannte Objekte an der Strecke. Das Schienenfahrzeug 101 hat beispielsweise eine Fahrerlaubnis (Movement Authority) bis in die nächste Station. Auf Basis der digitalen Karte im Zugsteuergerät sind dem Schienenfahrzeug 101 die geometrischen Gegebenheiten der Strecke wie die Balise 106 als Referenzpunkt, ein Referenzabstand zum Reflektor 109 und ein Abstand zum Reflektor 111 bekannt.
- Schritt 1:: Das Schienenfahrzeug 101 überfährt erwartungsgemäß die Balise 106 auf der Strecke. Durch die Überfahrt wird eine Referenzmessung des Abstandes zwischen dem Reflektor 109 und der Balise 106 initiiert. Optional kann eine Überprüfung vorgenommen werden. Im ersten Fall stimmt die Messung mit der digitalen Karte innerhalb eines Toleranzmaßes überein. Wegen erfolgreicher Plausibilisierung wird mit einem weiteren Schritt 2 fortgefahren. Im zweiten Fall, dass die Messung mit der digitalen Karte nicht übereinstimmt, ist das Schienenfahrzeug 101 für eine genaue Ortung nicht bereit und das Verfahren wird beendet, ggf. mit einer Fehlermeldung.
- Schritt 2:: Das Schienenfahrzeug 101 hat die Funktionsfähigkeit des Radars erfolgreich verifiziert. Die Ortung des Schienenfahrzeugs 101 wird nun mittels kontinuierlicher Abstandsmessung zu dem ersten Reflektor 109 in Kombination mit den Informationen der digitalen Karte durchgeführt. Diese Positionsbestimmung erfolgt beispielsweise kontinuierlich (ohne Pausen), kann aber auch Pausen zwischen einzelnen Positionsbestimmungen vorsehen. Die Positionsbestimmung weist einen im Vergleich zur Odometrie geringen Fehler auf, der sich - im Gegensatz zur Odometrie - nicht fortpflanzt, weil sich das Schienenfahrzeug ja auf den Referenzpunkt Reflektor 109 zu bewegt. Das Schienenfahrzeug 101 fährt also in dem Reflektor-Sichtbereich.
- Schritt 3:: Wird der Reflektor 109 von dem Schienenfahrzeug 101 passiert, kann der Abstand zu diesem Reflektor 109 nicht mehr gemessen werden. Nun wird die Position des Schienenfahrzeugs 101 wieder - ausgehend von der zuletzt bekannten Position - mittels Odometrie bestimmt.
- Schritt 4:: Bevor der systematische Messfehler der Odometrie den tolerierbaren Fehler 117 überschreitet, ist entweder eine weitere Balise im Gleis positioniert und das Verfahren wird mit Schritt 1 fortgesetzt oder das Radar bzw. die Sensoreinheit beginnt in dem Messbild (reflektierten Signal) nach einem weiteren Reflektor (hier dem Reflektor 111) zu suchen. Eine solche Suche kann basierend auf der aktuell bekannten Position und einem basierend auf der digitalen Karte bestimmten Abstand zu dem Reflektor 111 veranlasst werden. Beispielsweise beginnt der "Reflektor-Suchbereich" mit Blick auf den tolerierbaren Odometriemessfehler entsprechend (rechtzeitig) vor dem Anfang des nächsten "Reflektor-Sichtbereichs" und endet dementsprechend mit oder hinter diesem.

Bevorzugt unterscheidet sich der weitere Reflektor 111 im Messbild der Sensoreinheit vom ersten Reflektor 109. Dies kann z.B. erreicht werden, indem unterschiedliche Reflektor-Typen A und B eingesetzt werden. Dadurch wird die Identifikation der Radar-Reflektoren im Messbild zusätzlich plausibilisiert und eine Verwechslung mit benachbarten Reflektoren vermieden.

Wieder kann eine Unterscheidung durchgeführt werden: Im ersten Fall findet das Schienenfahrzeug 101 den Reflektor 111 im Messbild und bestimmt die Position anhand der Signalbilder des Reflektors 111 wie in Schritt 2. Das Verfahren wird mit Schritt 3 für den nächsten Odometriebereich und gefolgt von Schritt 4 für den anderen Reflektor-Typ durchgeführt. Im anderen Fall, also falls die Messung mit der digitalen Karte nicht übereinstimmt oder der Reflektor 111 nicht gefunden wird, ist das Schienenfahrzeug 101 für die Positionsbestimmung nicht bereit, das Verfahren wird beendet, gegebenenfalls wird eine Fehlermeldung generiert.

Bei dem Verfahren sind die Positionen der Reflektoren 109, 111 absolut zu der Balise 106 bekannt. Bevorzugt wird bei einer Balisenüberfahrt die Funktionsfähigkeit der Sensoreinheit bzw. des Radars mit Hilfe einer Referenzmessung durch Bestimmung des Abstands von der Balise 106 zu dem ersten Reflektor 109 überprüft. Die Sensoreinheit kann beispielsweise fortwährend (mit oder ohne Unterbrechung) den Abstand zu den Reflektoren bestimmen. Optional kann bestimmt werden, ob dabei der Messfehler konstant bleibt bzw. keine Fehlerfortpflanzung entsteht.

Der vorliegende Ansatz kann einen einzelnen Radar-Reflektor-Typ oder mehrere Radar-Reflektor-Typen verwenden. Durch den Einsatz mehrerer Radar-Reflektor-Typen ist es möglich, anhand der Identifikation der Reflektoren oder einer Abfolge von Reflektoren zusätzlich die bestimmte Position zu plausibilisieren. Insbesondere kann dadurch die Verwechslungsgefahr mit benachbarten Reflektoren verringert werden.

Der vorliegende Ansatz ermöglicht ferner eine präzise positionierte Stationseinfahrt. Eine solche Situation wird anhand von Fig.2 veranschaulicht. Dabei bezeichnen bereits in Fig.1 verwendeten Bezugszeichen entsprechend gleiche oder gleich wirkende Komponenten und funktionale Merkmale. Insoweit sei auf die Ausführungen zu Fig.1 verwiesen.

Das Schienenfahrzeug 101 fährt in Fahrtrichtung 102 auf eine Station 201 zu, wobei eine Positionsbestimmung mittels der Steuerung 104 des Schienenfahrzeugs 101 durchgeführt wird.

Hinter einer ersten Balise 202, die insbesondere als eine Festdatenbalise ausgeführt ist, befindet sich in einem absoluten Abstand 203 (z.B. Referenzabstand) ein erster Reflektor 204. Ein zweiter Reflektor 205 befindet sich mit einem Abstand 206 zu der Balise 202 an einem oder beabstandet zu einem Haltepunkt 207. Ein Reflektor 208 befindet sich mit einem Abstand 209 zu der Balise 202 an einem oder beabstandet zu einem Haltepunkt 210. Das sich annähernde Schienenfahrzeug 101 hat entsprechend die relativen Abstände 211, 212 zu den Haltepunkten 207 bzw. 210. Beispielhaft sind die Reflektoren wieder als Radar-Reflektoren ausgebildet und die Sensoreinheit ist wieder als Radar-Sensoreinheit ausgebildet.

Fig.2 zeigt auch Geschwindigkeitskurven 213, 214 des Schienenfahrzeugs 101 als Geschwindigkeit v über der Strecke s. Das Schienenfahrzeug kann gemäß den Geschwindigkeitskurven 213, 214 abhängig von der Positionsbestimmung mit Hilfe der Steuerung 104 gesteuert werden.

Das Schienenfahrzeug 101 fährt im Ausgangszustand auf der freien Strecke auf die Station 201 zu und soll dort am ersten Haltepunkt 207 stehen bleiben, damit ein Fahrgastwechsel erfolgen kann. Auf Basis der digitalen Karte im Zugsteuergerät sind dem Schienenfahrzeug 101 bzw. dessen Steuerung 104 die geometrischen Kenngrößen der Station 201 wie der Referenzabstand 203 und die absoluten Abstände 206, 209 zu den Haltepunkten 207, 210 bekannt. Vorzugsweise kann zumindest ein Teil der folgenden Schritte durchgeführt werden:
- Schritt 1:: Das Schienenfahrzeug 101 überfährt erwartungsgemäß die Balise 202 vor der Station 201. Durch die Überfahrt wird eine Referenzmessung des Abstandes zwischen dem Reflektor 204 und der Balise 202 initiiert. Optional kann eine Überprüfung der Positionsbestimmung durchgeführt werden (siehe oben: Schritt 1 zu Fig.1).
- Schritt 2:: Das Schienenfahrzeugs 101 hat die Funktionsfähigkeit des Radars erfolgreich verifiziert. Die Positionsbestimmung des Schienenfahrzeugs 101 wird anhand der Stationsgeometrie anhand der Reflektoren 205, 208 und der digitalen Karte durchgeführt. Auf Basis der digitalen Karte und der im vorstehenden Schritt 1 ermittelten Position sucht die Sensoreinheit in deren Messbild die Reflektoren 205 und/oder 208 für den Haltepunkt 207 bzw. 210.
- Schritt 3:: Das Schienenfahrzeug 101 bestimmt seine Position anhand der Reflexionen von den Reflektoren 205, 208 für den Haltepunkt 207 und/oder 210.
- Schritt 4:: Auf Basis dieser Positionsbestimmung leitet das Schienenfahrzeug 101 eine Bremsung ein, wobei die Steuerung 104 weiß, dass das Schienenfahrzeug 101 im vorliegenden Beispiel an dem Haltepunkt 207 anhalten soll. Dabei wird auf Basis einer insbesondere fortwährenden (z.B. relativen) Abstandsmessung zu dem Reflektor 205 die Bremsung vom Zugsteuergerät beispielsweise kontinuierlich bis zum Stillstand überwacht.
- Schritt 5:: Das Schienenfahrzeug 101 hält an der Halteposition mit einem definierten Abstand zum Reflektor 205 des Haltepunkts 207 an. Vorzugsweise kann der Abstand zwischen der Standposition des Schienenfahrzeugs 101 und dem Reflektor 205 dabei vorgegeben sein, beispielsweise so dass die Sensoreinheit den Reflektor 205 insbesondere auch im Stillstand des Schienenfahrzeugs 101 noch detektieren kann.
- Schritt 6:: Fehlerhafter Bremsvorgang: Sollte das Schienenfahrzeug einen fehlerhaften Bremsvorgang durchgeführt haben und über den Haltepunkt 207 hinaus gefahren sein, ist eine Neupositionierung des Schienenfahrzeugs unter Berücksichtigung der Reflektoren 207, 210 möglich, weil permanent der Abstand zu diesen gemessen werden kann. Diese Neupositionierung erfolgt vorzugsweise mit geringer Geschwindigkeit. Beispielsweise tritt bei einer Rückwärtsfahrt der dem Haltepunkt 207 zugeordnete Reflektor 205 wieder in den Erfassungsbereich der Sensoreinheit ein, so dass ein genaues Anhalten an dem Haltepunkt 207 im Rahmen der Neupositionierung erreicht werden kann.

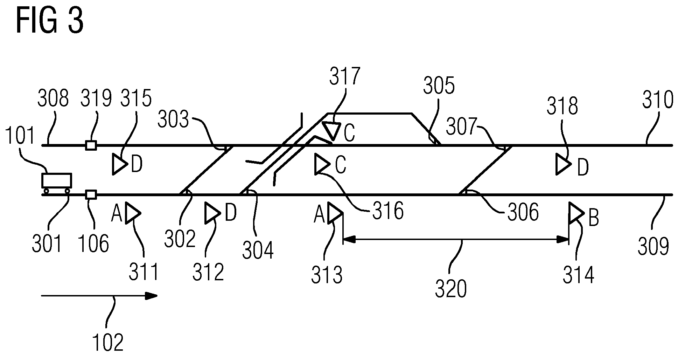

Hierbei ist es eine Option, dass auf Grundlage der vorstehend diskutierten Systemkonfiguration auch eine Durchfahrt von Bereichen mit Abzweigungen (Weichen) möglich ist und trotzdem eine genaue Positionsbestimmung des Schienenfahrzeugs erreicht werden kann. Eine derartige Situation ist anhand von Fig.3 veranschaulicht. Dabei bezeichnen bereits in Fig.1 verwendeten Bezugszeichen entsprechend gleiche oder gleich wirkende Komponenten und funktionale Merkmale. Insoweit sei auf die Ausführungen zu Fig.1 verwiesen.

Das Schienenfahrzeug 101 fährt auf einem ersten Gleis 301 in Fahrtrichtung 102 auf eine beispielhafte Anordnung von Weichen 302 bis 307 zu. Eine Positionsbestimmung wird wieder mittels der Steuerung 104 und der Sensoreinheit des Schienenfahrzeugs 101 durchgeführt. Parallel zum ersten Gleis 301 befindet sich ein zweites Gleis 308.

Es ergeben sich folgende Fahrwege: Ein erster Fahrweg führt von dem ersten Gleis 301 auf diesem bleibend über die Weichen 302, 304 und 306 zu einem Gleisabschnitt 309. Ein zweiter Fahrweg führt von dem ersten Gleis 301 und zweigt über die Weichen 302 und 303 auf das zweite Gleis 308 ab und führt über das zweite Gleis und dessen Weichen 305 und 307 zu einem Gleisabschnitt 310. Ein dritter Fahrweg führt von dem ersten Gleis 301 über die Weiche 302 und zweigt bei der Weiche 304 ab, führt durch einen Tunnel und bei der Weiche 305 auf das zweite Gleis 308 und weiter über dessen Weiche 307 zu dem Gleisabschnitt 310. Ein vierter Fahrweg führt vom ersten Gleis 301 über die Weichen 302 und 304 und zweigt bei der Weiche 306 ab und führt über Weiche 307 auf das zweite Gleis 308 und weiter in den Gleisabschnitt 310. Ein fünfter Fahrweg führt vom zweiten Gleis 308 kommend über dessen Weichen 303, 305 und 307 in den Gleisabschnitt 310.

Vorzugsweise unterscheiden sich die Reflektoren 311 bis 318 in Abzweig- und Geradeaus-Richtung eindeutig, damit die aktuelle Position des Schienenfahrzeugs eindeutig bestimmbar ist. Die Reflektoren 311 bis 318 sind in diesem beispielhaften Gleisverlauf in zueinander unterschiedlichen Ausgestaltungen derart angeordnet, dass der Sensoreinheit eine Unterscheidung abhängig vom jeweiligen Reflektor-Typ A, B, C bzw. D ermöglicht wird. Bevorzugt sind die Reflektoren 311 bis 318 wieder als Radar-Reflektoren bzw. als Radar-Reflektor-Bleche im Gleisbereich ausgebildet und die Sensoreinheit ist wieder als Radar-Sensoreinheit ausgebildet.

Ein Reflektor 311 des Typs A ist neben dem ersten Gleis 301 vor dessen erster Weiche 302 angeordnet. Ein Reflektor 312 des Typs D ist neben dem ersten Gleis 301 zwischen dessen erster Weiche 302 und dessen zweiter Weiche 304 angeordnet. Ein Reflektor 313 des Typs A ist neben dem ersten Gleis 301 zwischen dessen zweiter Weiche 304 und dessen dritter Weiche 306 angeordnet. Ein Reflektor 314 des Typs B ist neben dem ersten Gleis 301 hinter dessen dritter Weiche 306 angeordnet. Ein Reflektor 315 des Typs D ist neben dem zweiten Gleis 308 vor dessen erster Weiche 303 angeordnet. Ein Reflektor 317 des Typs C ist neben dem zweiten Gleis 308 zwischen dessen erster Weiche 303 und dessen zweiter Weiche 305 angeordnet. Ein Reflektor 318 des Typs D ist neben dem zweiten Gleis 308 hinter dessen dritter Weiche 307 angeordnet. Ein weiterer Reflektor 316 des Typs C ist neben dem Gleis zwischen der zweiten Weiche 304 des ersten Gleises 301 und der zweiten Weiche 305 des zweiten Gleises 308 angeordnet.

Die möglichen Fahrstrecken von links nach rechts sind bei Durchfahrt mittels der Sensoreinheit eindeutig erkennbar und unterscheidbar anhand der Abfolge der Reflektor-Typen, hier: ADAB, ACD, ADCD, ADAD bzw. DCD.

Im Nachfolgenden wird ein beispielhaftes Verfahren zur Positionsbestimmung des Schienenfahrzeugs 101 beschrieben, wobei insbesondere die Unterschiede zu dem in Fig.1 beschriebenen Ansatz erläutert werden. Zur Vereinfachung der Beschreibung wird wieder davon ausgegangen, dass auf dem ersten Gleis 301 vor dessen erstem Reflektor 311 eine Balise 106 angeordnet ist und entsprechend auf dem zweiten Gleis 308 vor dessen erstem Reflektor 315 eine Balise 319 angeordnet ist. Außerdem werden bei diesem Beispiel auch die unterschiedlichen Typen A, B, C und D der Reflektoren 311 bis 318 von der Steuerung 104 berücksichtigt.
- Schritt 1:: Das Schienenfahrzeug 101 überfährt erwartungsgemäß die Balise 106 auf der Strecke bzw. dem ersten Gleis 301 und führt die Schritte gemäß dem oben zu Fig.1 beschriebenen Schritt 1 durch. Im ersten Fall wird dabei geprüft, ob die Messung mit der digitalen Karte hinsichtlich Entfernung und Fahrtrichtung übereinstimmt, wobei insbesondere auch unterschiedliche Reflektor-Typen hinter und bevorzugt auch vor der Balise 106 berücksichtigt werden. Anhand der Abfolge der überfahrenen Reflektor-Typen kann somit auf die Fahrtrichtung 102 des Schienenfahrzeugs 101 geschlossen werden.
- Schritt 2:: Die Positionsbestimmung des Schienenfahrzeugs 101 wird wie zu Fig.1 erläutert anhand der Abstandsmessung zu den Reflektoren und anhand der digitalen Karte durchgeführt während das Schienenfahrzeug 101 im "Reflektor-Sichtbereich" fährt. Wird innerhalb des Reflektor-Sichtbereichs eine Weiche überfahren, kann z.B. aufgrund einer Bewegung des Reflektors im Messbild der Sensoreinheit festgestellt werden, ob das Schienenfahrzeug geradeaus fährt oder abbiegt. Somit können die Positionsbestimmung über die digitale Karte und die Fahrerlaubnis (MA) plausibilisiert und/oder überprüft werden. Vorteilhaft folgt jeder Weiche ein Reflektor in einem Abstand, der so gewählt ist, dass sich die Weiche in dessen Reflektor-Sichtbereich befindet. Beispielsweise befindet sich die Weiche 306 in einem Reflektor-Sichtbereich 320 des Reflektors 314.
- Schritt 3:: Wenn das Schienenfahrzeug 101 sich beim Erreichen eines Reflektors nicht in einem Reflektor-Sichtbereich eines nachfolgenden Reflektors befindet, wird entsprechend dem vorstehend erläuterte Beispiel (siehe z.B. Fig.1) in den Odometriebereich gewechselt und die Position anhand der Odometrie bestimmt.
- Schritt 4:: (siehe auch Schritt 4 des zu Fig.1 beschriebenen Ansatzes) entspricht ebenfalls Schritt 4 des Verfahrens zu Fig.1. Wird in einem Odometriebereich eine Weiche überfahren, ist hinter der Weiche entweder eine Balise zur erneuten absoluten Positionsbestimmung oder es beginnt ein Reflektor-Sichtbereich eines Reflektors. Insbesondere ist der Abstand nach der Weiche so bemessen, dass der maximal tolerierbare Fehler bei der Positionsbestimmung mittels Odometers nicht überschritten wird.

Beispielsweise ermöglicht die Sensoreinrichtung somit eine Erfassung einer unterschiedlichen Bewegung eines Abbilds des reflektierten Signals eines Reflektors bei einer Überfahrt über eine Weiche abhängig von der durch die Weiche vorgegebenen Fahrtrichtung.

Weiterhin ist es eine Option, dass die Sensoreinrichtung eine Erfassung unterschiedlicher Abfolgen von Reflektor-Typen D-C, A-C bzw. B-D der hinter einem Abzweig 302, 304 bzw. 306 angeordneten Reflektoren 312-317, 313-316 bzw. 314-318 abhängig von der durch den Abzweig vorgegebenen Fahrtrichtung ermöglicht. Die Typen A, B, C, D der Radar-Reflektoren 311 bis 318 lassen sich dabei im Messbild, insbesondere Radarmessbild ausreichend eindeutig unterscheiden, z.B. durch Form und/oder Reflexionseigenschaften der Reflektor-Flächen.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

## Patentansprüche

1. Verfahren zur Positionsbestimmung eines Schienenfahrzeugs (101), wobei
- in einem Odometriebereich (114) die Positionsbestimmung mittels eines Odometers (107) des Schienenfahrzeugs (101) durchgeführt wird,
- in einem Reflektor-Sichtbereich (115) die Position des Schienenfahrzeugs (101) anhand eines von einer Sensoreinheit (108) des Schienenfahrzeugs (101) empfangenen reflektierten Signals bestimmt wird und
- der Odometriebereich (114) durch den Reflektor-Sichtbereich abgelöst wird, sobald ein von einem Reflektor (109, 111) empfangenes reflektiertes Signal eine vorgegebene Mindestintensität aufweist.

2. Verfahren nach Anspruch 1, bei dem die Sensoreinheit (108) eine Übertragungseinheit, insbesondere Sende-Empfangseinrichtung ist, die ein Radarsignal aussendet und ein reflektiertes Radarsignal empfängt, wobei anhand des reflektierten Radarsignals die Position des Schienenfahrzeugs (101) bestimmt wird.

3. Verfahren nach einem der vorhergehenden Ansprüche,
- bei dem das empfangene reflektierte Signal von einem Reflektor (109, 111) bereitgestellt wird, der im Sichtbereich des Schienenfahrzeugs (101) angeordnet ist,
- wobei die Position des Reflektors (109, 111) gespeichert ist und
- wobei anhand der gespeicherten Position des Reflektors (109, 111) und anhand des empfangenen reflektierten Signals die Position des Schienenfahrzeugs (101) bestimmt wird.

4. Verfahren nach Anspruch 3, bei dem die Position des Reflektors (109, 11) in einer digitalen Karte gespeichert ist.

5. Verfahren nach einem der Ansprüche 3 oder 4, bei dem die Position des Schienenfahrzeugs (101) anhand des empfangenen reflektierten Signals von mindestens dem Reflektor (109, 111) und anhand von Daten, die einer Balise (106) ausgelesen werden, bestimmt wird.

6. Verfahren nach Anspruch 5, bei dem mittels der von der Balise (106) ausgelesenen Daten und mittels des empfangenen reflektierten Signals eine Funktionsprüfung der Sensoreinheit (108) durchgeführt wird.

7. Verfahren nach einem der Ansprüche 5 oder 6, wobei der Reflektor (109, 111) in Fahrtrichtung (102) nach der Balise (106) angeordnet ist.

8. Verfahren nach Anspruch 7, bei dem zwischen der Balise (106) und dem Reflektor (109, 111) ein vorgegebener Abstand (110, 112) liegt, wobei anhand des vorgegebenen Abstands (110, 112) ab einer bestimmten Strecke nach der Balise in dem reflektierten Signal nach dem Reflektor (109, 111) gesucht wird.

9. Verfahren nach Anspruch 7, bei dem die Balise (106) eine Entfernungsinformation zu dem Reflektor (109, 111) bereitstellt.

10. Verfahren nach einem der Ansprüche 3 bis 9, bei dem mehrere Reflektoren (109, 111) vorgesehen sind, wobei zumindest ein Teil der Reflektoren (109, 111) unterschiedlichen Typs (A, B) sind.

11. Verfahren nach Anspruch 10, bei dem in Fahrtrichtung (102) vor und hinter einer Weiche(z.B. 102) Reflektoren (312, 313, 317) vorgesehen sind, wobei die Reflektoren (3313, 317) hinter der Weiche (302) unterschiedlichen Typs (C, D) sind.

12. Verfahren nach einem der vorhergehenden Ansprüche, wobei anhand des von der Sensoreinheit (108) des Schienenfahrzeugs (101) empfangenen reflektierten Signals bestimmt wird, ob das Schienenfahrzeug abbiegt (101).

13. Vorrichtung zur Positionsbestimmung eines Schienenfahrzeugs (101) mit einem Odometer (107) und einer Sensoreinheit (108), wobei die Vorrichtung ausgebildet ist,
- in einem Odometriebereich (114) die Positionsbestimmung mittels des Odometers (107) des Schienenfahrzeugs (101) durchzuführen,
- in einem Reflektor-Sichtbereich (115) die Position des Schienenfahrzeugs (101) anhand eines von der Sensoreinheit (108) des Schienenfahrzeugs (101) empfangenen reflektierten Signals zu bestimmen und
- den Odometriebereich (114) durch den Reflektor-Sichtbereich abzulösen, sobald ein von einem Reflektor (109, 111) empfangenes reflektiertes Signal eine vorgegebene Mindestintensität aufweist.

14. Schienenfahrzeug (101) mit einer Vorrichtung nach Anspruch 13.

15. System mit mindestens einem Schienenfahrzeug (101) gemäß Anspruch 14 und mit längs einer Strecke angeordneten Reflektoren (109, 111).

## Claims

1. Method for determining the position of a rail vehicle (101), wherein
- in an odometry region (114) the determination of the position is performed by means of an odometer (107) of the rail vehicle (101),
- in a reflector visibility region (115) the position of the rail vehicle (101) is determined on the basis of a reflected signal received by a sensor unit (108) of the rail vehicle (101) and
- the odometry region (114) is replaced by the reflector visibility region as soon as a reflected signal received from a reflector (109, 111) has a predefined minimum intensity.

2. Method according to claim 1, in which the sensor unit (108) is a transmission unit, in particular a transmitter-receiver device, which emits a radar signal and receives a reflected radar signal, wherein on the basis of the reflected radar signal the position of the rail vehicle (101) is determined.

3. Method according to one of the preceding claims,
- in which the received reflected signal is provided by a reflector (109, 111) which is arranged in the visibility region of the rail vehicle (101),
- wherein the position of the reflector (109, 111) is stored and
- wherein on the basis of the stored position of the reflector (109, 111) and on the basis of the received reflected signal the position of the rail vehicle (101) is determined.

4. Method according to claim 3, in which the position of the reflector (109, 111) is stored in a digital map.

5. Method according to one of claims 3 or 4, in which the position of the rail vehicle (101) is determined on the basis of the reflected signal received from at least the reflector (109, 111) and on the basis of data which is read out from a balise (106).

6. Method according to claim 5, in which by means of the data read out from the balise (106) and by means of the received reflected signal a functional check of the sensor unit (108) is performed.

7. Method according to one of claims 5 or 6, wherein the reflector (109, 111) is arranged in the direction of travel (102) downstream of the balise (106).

8. Method according to claim 7, in which there is a predefined distance (110, 112) between the balise (106) and the reflector (109, 111), wherein on the basis of the predefined distance (110, 112) a search is carried out for the reflector (109, 111) in the reflected signal as from a predefined track section downstream of the balise.

9. Method according to claim 7, in which the balise (106) provides distance information to the reflector (109, 111).

10. Method according to one of claims 3 to 9, in which a plurality of reflectors (109, 111) is provided, wherein at least some of the reflectors (109, 111) are of a different type (A, B).

11. Method according to claim 10, in which reflectors (312, 313, 317) are provided in the direction of travel (102) upstream and downstream of a point (e.g. 102), wherein the reflectors (313, 317) downstream of the point (302) are of a different type (C, D).

12. Method according to one of the preceding claims, wherein on the basis of the reflected signal received by the sensor unit (108) of the rail vehicle (101) it is determined whether the rail vehicle (101) is diverging.

13. Device for determining the position of a rail vehicle (101) having an odometer (107) and a sensor unit (108), wherein the device is designed
- in an odometry region (114) to perform the determination of the position by means of the odometer (107) of the rail vehicle (101),
- in a reflector visibility region (115) to determine the position of the rail vehicle (101) on the basis of a reflected signal received by the sensor unit (108) of the rail vehicle (101) and
- to replace the odometry region (114) by the reflector visibility region as soon as a reflected signal received from a reflector (109, 111) has a predefined minimum intensity.

14. Rail vehicle (101) having a device according to claim 13.

15. System having at least one rail vehicle (101) in accordance with claim 14 and having reflectors (109, 111) arranged along a track section.

## Revendications

1. Procédé de détermination de la position d'un véhicule (101) ferroviaire, dans lequel
- dans une zone (114) d'odomètrie, on effectue la détermination de la position au moyen d'un odomètre (107) du véhicule (101) ferroviaire,
- dans une zone (115) visuelle de réflecteur, on détermine la position du véhicule (101) ferroviaire à l'aide d'un signal réfléchi reçu par une unité (108) de capteur du véhicule (101) ferroviaire et
- on remplace la zone (114) d'odomètrie par la zone visuelle de réflecteur dès qu'un signal réfléchi reçu d'un réflecteur (109, 111) a une intensité minimum donnée à l'avance.

2. Procédé suivant la revendication 1, dans lequel l'unité (108) de capteur est une unité de transmission, notamment un dispositif d'émission-réception, qui émet un signal radar réfléchi, la position du véhicule (101) ferroviaire étant déterminée à l'aide du signal radar réfléchi.

3. Procédé suivant l'une des revendications précédentes,
- dans lequel le signal réfléchi reçu est mis à disposition par un réflecteur (109, 111), qui est disposé dans la zone visuelle du véhicule (101) ferroviaire,
- dans lequel la position du réflecteur (109, 111) est mémorisée et
- dans lequel on détermine la position du véhicule (101) ferroviaire à l'aide de la position mémorisée du réflecteur (109, 111) et à l'aide du signal réfléchi reçu.

4. Procédé suivant la revendication 3, dans lequel la position du réflecteur (109, 111) est mémorisée dans une carte numérique.

5. Procédé suivant l'une des revendications 3 ou 4, dans lequel on détermine la position du véhicule (101) ferroviaire à l'aide du signal réfléchi reçu par au moins le réflecteur (109, 111) et à l'aide de données qui sont lues dans une balise (106).

6. Procédé suivant la revendication 5, dans lequel on effectue un contrôle du fonctionnement de l'unité (108) de capteur au moyen des données lues dans la balise (106) et au moyen du signal réfléchi reçu.

7. Procédé suivant l'une des revendications 5 ou 6, dans lequel le réflecteur (109, 111) est disposé après la balise (106) dans le sens (102) de marche.

8. Procédé suivant la revendication 7, dans lequel il y a entre la balise (106) et le réflecteur (109, 111) une distance (110, 112) donnée à l'avance, dans lequel, à l'aide de la distance (110, 112) donnée à l'avance, à partir d'un tronçon déterminé après la balise, on recherche dans le signal réfléchi le réflecteur (109, 111).

9. Procédé suivant la revendication 7, dans lequel la balise (106) met à disposition une information d'éloignement du réflecteur (109, 111).

10. Procédé suivant l'une des revendications 3 à 9, dans lequel il est prévu plusieurs réflecteurs (109, 111), au moins une partie des réflecteurs (109, 111) étant de types (A, B) différents.

11. Procédé suivant la revendication 10, dans lequel il est prévu des réflecteurs (312, 313, 317) dans le sens (102) de la marche avant et après un aiguillage (par exemple 02), les réflecteurs 3313, 317) derrière l'aiguillage (302) étant de types (C, D) différents.

12. Procédé suivant l'une des revendications précédentes, dans lequel, à l'aide du signal réfléchi reçu par l'unité (108) de capteur du véhicule (101) ferroviaire, on détermine si le véhicule ferroviaire tourne (101).

13. Dispositif de détermination de la position d'un véhicule (101) ferroviaire, comprenant un odomètre (107) et une unité (108) de capteur, le dispositif étant constitué,
- pour effectuer, dans une zone (114) d'odomètrie, la détermination de positions au moyen de l'odomètre (107) du véhicule (101) ferroviaire,
- dans une zone (115) visuelle de réflecteur, pour déterminer la position du véhicule (101) ferroviaire à l'aide d'un signal réfléchi reçu par l'unité (108) de capteur du véhicule (101) ferroviaire et
- de remplacer la zone (114) d'odomètrie par la zone visuelle de réflecteur dès qu'un signal réfléchi reçu d'un réflecteur (109, 111) a une intensité minimum donnée à l'avance.

14. Véhicule (101) ferroviaire ayant un dispositif suivant la revendication 13.

15. Système comprenant au moins un véhicule (101) ferroviaire suivant la revendication 14 et des réflecteurs (109, 111) disposés le long d'une voie.
